# EUROPEAN PATENT SPECIFICATION

(11) **EP 0 918 214 B1**
(45) Date of publication and mention of the grant of the patent: **08.08.2001**
(21) Application number: 97309290.1
(22) Date of filing: 19.11.1997
(51) Int. Cl.: G01M 1/24, G01M 1/04

(54) **Driveline system balancing**
Auswuchten eines Antriebsstrangs
Equilibrage de ligne de transmission

(43) Date of publication of application: 26.05.1999
(73) Proprietor: Ford Global Technologies, Inc., Dearborn, Michigan 48126 (US)
(72) Inventor: Moradi, Mohammad A., West Bloomfield, Michigan 48324 (US); Rossman, Michael D., Canton, Michigan 48188 (US); LaBell, Larry, Grosse lle, Michigan 48138 (US)
(74) Representative: Messulam, Alec Moses

(56) References cited:
- US-A- 5 419 192
- US-A- 5 641 904

## Description

### Field of the Invention

This invention relates to an apparatus for balancing an automotive driveline system.

### 2. Prior Art

In a rear wheel drive motor vehicle, the driveline comprises a transmission connected to a drive shaft which is then connected to a rear differential assembly which drives a rear drive axle. In most vehicles, the individual driveline components are balanced to provide a minimal vibration due to component imbalance. However residual imbalances remain in the components and these imbalances may accumulate to provide an unacceptable driveline assembly.

To correct such imbalance, some vehicle manufacturers assemble the vehicle completely, then drive each assembled vehicle on a road course to establish whether the driveline imbalance of that particular vehicle is acceptable. Any perceived excessive imbalance is then corrected by diagnosing the imbalance and adding weights to the driveline at the appropriate location. Methods to balance the driveline include unbolting the driveline and reassembling the driveline with heavier fasteners to correct the imbalance, or by adding weights to the drive shaft by welding or otherwise securing a weight. These methods require excessive diagnostic time and do not capture imbalances which are marginally objectionable to some drivers, and they require dismantling of the vehicle.

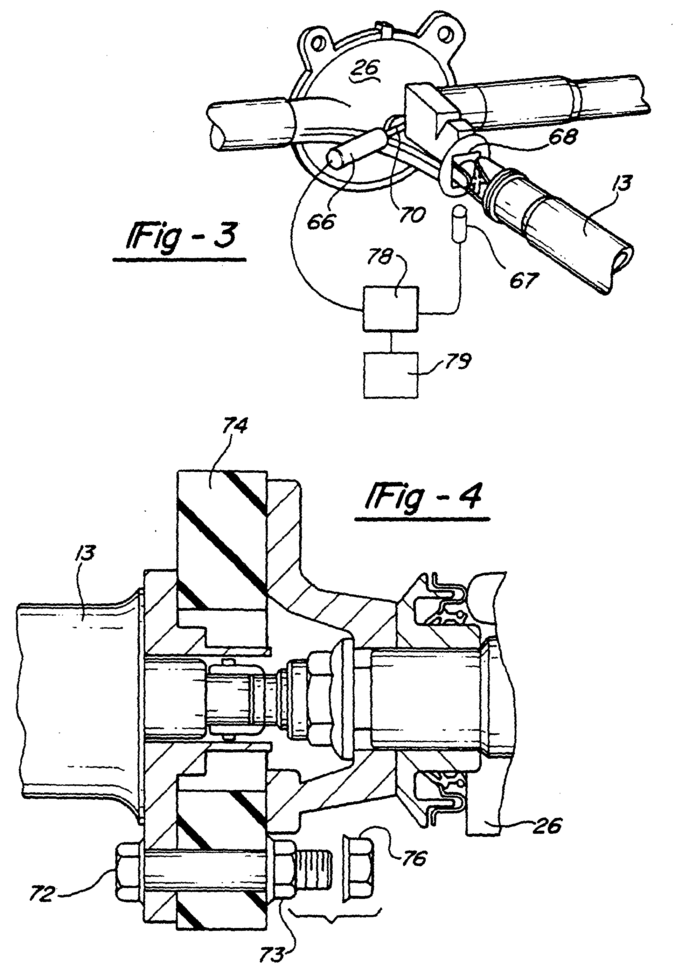

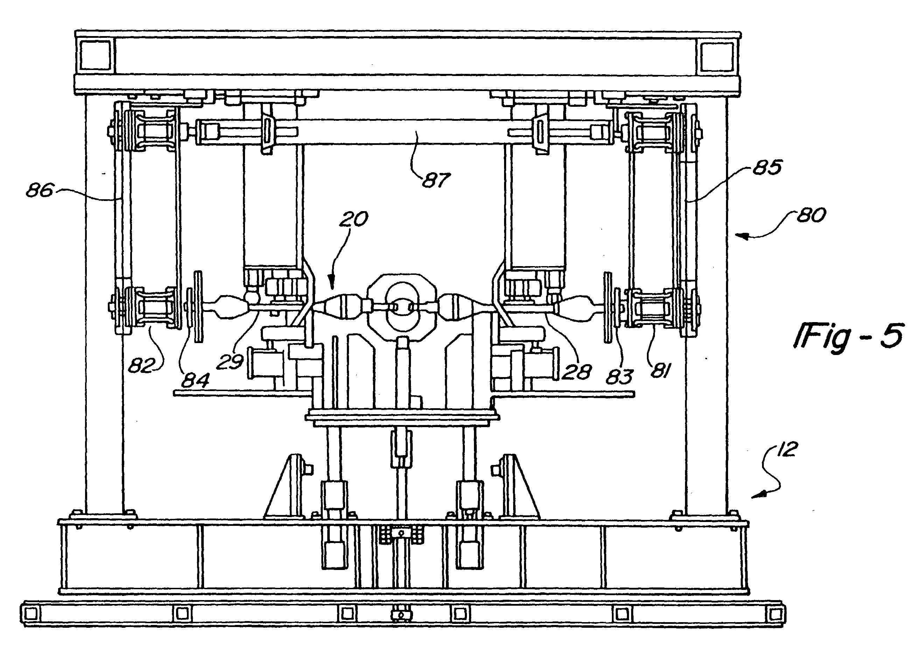

US-A-5,419,192 (Maxwell et al) describes an apparatus for balancing a combined assembly of a drive shaft and axle input shaft. A system described in this patent is particularly intended for balancing a solid rear axle. The '192 device supports the differential, as shown in figure 4, using a first head 70 to support the front of-the differential. Figure 5 shows further support for the axle, including a cradle 63 and a pair of support arms 65 and 66, as described in column 6 lines 18-69. Such mounting of the rear axle does not simulate the mounting experienced in the motor vehicle, because the cradle 63 and first head 70 do not relate to any attachment supporting the axle in the motor vehicle and therefore the fixture does not accurately simulate the driveline dynamics in the vehicle. Furthermore the sensor 78 used in Maxwell ('192) is mounted, as shown in figure 6 of Maxwell, to the bracket 73 which supports the front of the differential and the centre bearing. By so positioning the sensor and so supporting the driveline assembly, the true vibrations experienced by the driveline of the motor vehicle are not accurately measured. The vibration of the fixture is measured.

It is therefore desirable to provide a fixture to mount a driveline assembly simulating the environment in a motor vehicle and directly measuring the vibrations produced in the driveline assembly.

### SUMMARY OF THE INVENTION

In accordance with the present invention, there is provided an apparatus for balancing a driveline assembly of a motor vehicle, the driveline including a drive shaft drivingly engaged through a coupling with an axle assembly comprising a differential enclosed in a case, the apparatus comprising: a drive shaft support for rotatably supporting the drive shaft; a motor for rotating the combined assembly of the drive shaft and axle assembly; a vibration sensor for measuring vibrations generated by the drive shaft and axle assembly while rotated and for generating signals in response thereto, the vibration sensor sensing vibrations of one of the group consisting of the drive shaft, the differential case and the coupling; an imbalance calculator, said calculator receiving the signals from said sensor and determining a size and position for a balance-weight to be secured to the drive shaft to rotatably balance the driveline; an indicator for displaying the balance weight to be secured to the drive shaft; and a plurality of axle mounting supports for supporting the axle assembly, each of said axle mounting supports supporting the axle assembly at an attachment on the axle assembly where the axle assembly is mounted to the motor vehicle.

### BRIEF DESCRIPTION OF THE DRAWINGS

The invention will now be described further, by way of example, with reference to the accompanying drawings, in which:
Figure 1 is a perspective view of a driveline mounted in a fixture,
Figure 2 is a perspective view of a supported differential,
Figure 3 is a perspective view of a sensor mounted to a differential for measuring imbalance,
Figure 4 is a side elevation of a flexible coupling, and
Figure 5 is a front elevation of a fixture.

### DETAILED DESCRIPTION OF THE PREFERRED EMBODIMENTS

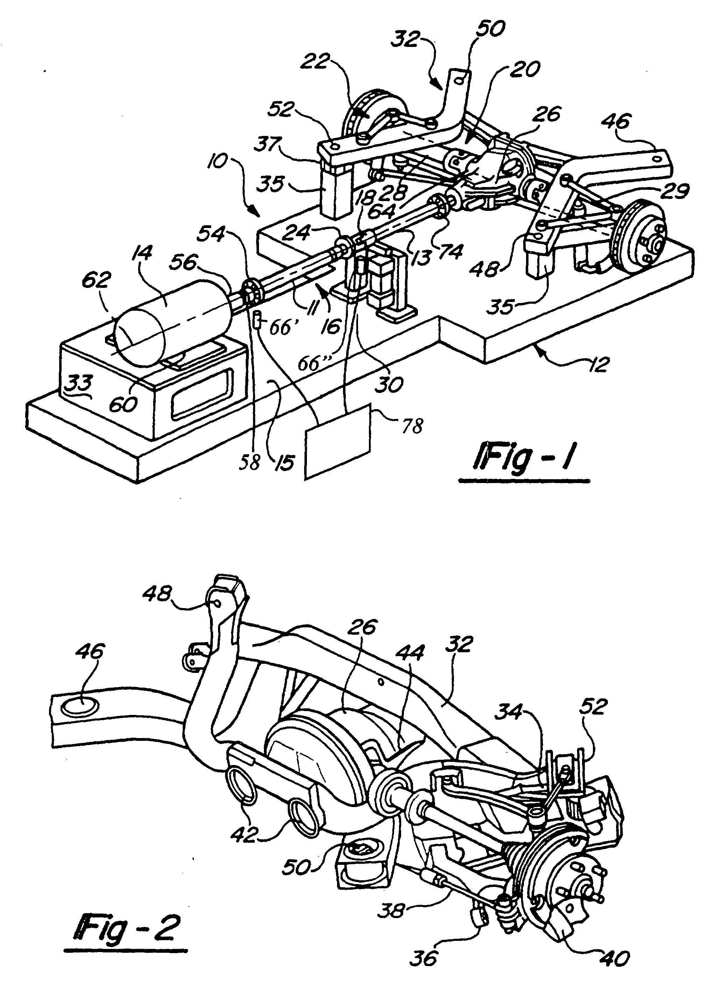

Referring to Figure 1, a driveline 10 is mounted in a fixture 12 that provides a motor 14 for driving the driveline 10 and mounting supports to simulate the mounting of the driveline 10 in the motor vehicle (not shown). By simulating the mounting arrangement of the driveline 10 to the motor vehicle, the present invention more accurately predicts the driveline dynamics in the vehicle.

Most drive lines 10 for a rear wheel vehicle comprise a two-piece drive shaft 16 having a centre bearing 18 support and an axle 20 supported by an independent suspension 22. A fixture 12 to support such a driveline 10 design will be described in the present application. One skilled in the art will recognise other driveline configurations may be balanced using the method and fixture taught herein using minor modifications without departing from the scope of the invention as set forth in the claims, an example of which includes a single-piece drive shaft 16 without a centre bearing 18.

In the preferred embodiment, a driveline 10 includes a front drive shaft 11 which is supported and driven by the motor 14 of the fixture 12. The front drive shaft 11 is drivably connected to a rear drive shaft 13 through a universal joint 24. The drive shafts 11, 13 are further supported by a centre bearing 18 assembly. The centre bearing 18 is clamped in vehicle position to a support 30 in the fixture 12 which supports the centre bearing 18 and the driveline 10. The rear drive shaft 13 is connected to a rear axle 20 through a differential 26, as is known in the art, and is supported thereby. The differential 26 drives a pair of independently suspended rear half shafts 28, 29. The rear axle 20 is supported by a variety of suspension 22 components, as is known in the art. The above-mentioned suspension 22 components are ultimately mounted to the body of the motor vehicle (not shown), and the fixture 12 includes supports (32,35) which have provisions to mount the suspension 22 components at their attachment point to the vehicle and thereby support the axle 20 to simulate mounting the axle 20 to the body of the motor vehicle.

The suspension 22, as shown in Figure 2, is supported in the preferred embodiment as follows. A subframe 32 is provided which supports upper and lower control arms 34, 36. The control arms 34, 36 and toe link 38 support a knuckle 40 which supports a bearing (not shown) which supports the outboard end of the half shaft 11. The inboard end of the half shaft is supported by the differential 26 as is well known in the art. The subframe 32 further supports the differential 26 at the rear 42 and side 44 of the differential 26. The subframe 32 is subsequently attached to the body (not shown) at several locations 46,-48, 50, 52. These locations 46, 48, 50, 52 are used by the fixture to support the subframe 32 so the driveline 10 is supported as in the motor vehicle.

As shown in Figure 1, a flexible coupling 54 is preferably provided on the front of the front drive shaft 11. As is known in the art, the flexible coupling 54 includes six circumferentially spaced holes provided on the coupling 54 to bolt the drive shaft 11 to the transmission (not shown). The motor 14 of the fixture 12 of the described embodiment has a shaft 56 extending therefrom with a flange 58 provided at the distal end. The flange 58 includes a plurality of pins (not shown) to drivably engage the flexible coupling 54 of the front drive shaft 11. The pins (not shown) engage the holes on the coupling 54 and support the front of the drive shaft 11 and drivably engage the coupling 54. A cylinder (not shown) is preferably mounted between the motor 14 and the flexible coupling 54 to permit retraction and engagement of the pins (not shown) with the flexible coupling 54. The drive motor 14 is mounted on a slide 60 so a variety of drive shaft 16 lengths may be accommodated in one fixture 12.

The front drive shaft 11 further includes a pilot hole (not shown) in the front of the drive shaft at the centreline of the longitudinal axis 62 of the drive shaft 11. This pilot hole is engaged by a pin (not shown) provided on the shaft 56 of the fixture 12 to ensure proper alignment of the front of the drive shaft 11 to the drive motor 14.

The centre bearing 18 is supported by the fixture on a support 30 on the fixture 12 located in vehicle position. The bearing 18 is clamped to the support 30. A universal joint 24 is provided between the front drive shaft 11 and rear drive shaft 13 as is well known in the art. A second flexible coupling 74 is provided between the drive shaft 13 and differential 26. This coupling 74, like the front coupling 54, includes a plurality of circumferentially spaced bolts 72 and nuts 73 to secure the coupling 74 to the drive shaft 13 and differential 26.

The fixture 12 includes additional supports 35 to support the rear suspension 22 of the motor vehicle. The supports 35 correspond with the mounting points 46, 48, 50, 52 for the subframe 32 to the body. The subframe 32 is clamped to the fixture 12 to support the suspension 22 and driveline 10 to the fixture 12. The fixture 12 thus supports the driveline 10 in vehicle position as if the driveline 10 were mounted in the motor vehicle.

As the motor 14 rotates the driveline 10 in the fixture 12, vibrations of the driveline 10 are measured at the interface between the drive shaft 16 and the rear differential 26 using a detection means 64. As shown in Figure 3, the detection means 64 preferably comprises a sensor 66 clamped directly to the case of the differential 26 adjacent the differential input shaft 68. The sensor 66 is preferably clamped using a simple spring-loaded clamp 70 similar to a clothes pin. The sensor 66 is directly mounted to the differential 26 case to isolate the sensor 66 from vibrations created from the fixture 12 itself or other inputs from the environment, such as forklifts, unlike prior art designs.

In an alternative embodiment, although not illustrated here, the sensors sense vibrations through the subframe 32. Thus, the apparatus detects vibrations as experienced by the vehicle through the subframe. Preferably one or more such sensors is provided near or at the mounting locations of the subframe to the body of the vehicle. Preferably the sensors are provided on the fixture and are in contact with the subframe, or alternatively clipped onto the subframe in a manner similar to the differential case as described herein.

The sensor 66 preferably comprises a moving coil sensor commercially available from Schenck Turner. Alternatively, the detection means 64 may comprise non-contacting probes (not shown) described in the U.S. patent 5,431,049 to Kopp ('049). The non-contacting probes measure vibrations of the differential 26 case, the flexible coupling 74, or the rear end of the drive shaft 13. During rotation of-the driveline 10, the magnitude and orientation of any imbalance in the assembly at the rear end of the drive shaft 13 is thus measured by the sensor 66 and indicated to the operator by the fixture 12. The operator adds a weight 76 to the rear drive shaft 13 assembly to correct the imbalance. An alternative non-contact sensor comprises a laser.

The fixture 12 includes a calculator, preferably a computer 78, which in response to the signal generated by the sensor 66 uses an algorithm to calculate how much weight is to be added and at which rotational position the weight is to be added. Preferably, the computer 78 also calculates to which one or more of the bolts 72 the weight is to be added to offset the imbalance. The weights 76 preferably comprise threaded nuts 76 which are threaded to the bolts 72, the nuts 76 having known incremental weights selectable by the operator.

The nuts 76 preferably weigh from approximately 1 gram to approximately 8 grams having 1 gram increments therebetween other known methods of balancing, although not illustrated here, may be used, including adding a weight to the drive shaft 13 by welding or using an adhesively secured weight. Furthermore, the weighted nuts described above may alternatively comprise a weighted push-on nut, a J-clip, or any other weight added to the fasteners of the flexible coupling or added to the drive shaft 13 or flexible coupling 74 itself.

The fixture 12 measures the rotational orientation of the driveline 10 or the motor 14, thereby imputing the orientation of the driveline 10 using means known in the art. Thus as the driveline 10 rotates and an imbalance is measured, the fixture 12 is able to establish a position, as described in the '049 patent, 180° from the detected imbalance to add a weight 76 to the driveline 10.

Preferably the fixture includes a sensor 67, such as a proximity sensor, to determine the orientation of the bolts 72, as shown in Figure 4, provided on the rear coupling 74, which secure the drive shaft 13 to the differential 26. Thus the fixture 12 may coordinate the placement of weighted nuts 76 on one or more of the coupling bolts 72 opposite the measured imbalance to correct any imbalance. Because of the orientation of the bolts 72 and size of weights 76 available, it may be necessary to mount a second weight (not shown) on a second bolt (not shown) adjacent the first bolt 76 opposite the imbalance. A third weight (not shown) may be required at the rotational position imbalance to offset the weight of the added balancing nuts 76 if the weight thereof exceeds the measured imbalance by an unacceptable amount, thereby creating an unacceptable imbalance at a new position.

The fixture preferably includes a monitor 79 which displays the size of the weight to be added. Alternatively, a plurality of bins, one for each size of weight, may be provided with a light above each bin. The light above the proper bin is illuminated to indicate the proper weight to be added.

In the preferred embodiment the drive motor 14 drives the driveline 10 at approximately 3000 rpm, as determined by vehicle testing. The motor 14 speed may vary depending on the vehicle being tested and the drivetrain 10 provided therein. Alternatively, the optimal rotational speed for a particular driveline 10 is determined using the methods taught in Kopp ('049).

Preferably the fixture 12 indexes the drive shaft 13 to the correct rotational orientation to place the bolt 72 on which the operator is to install a specified weight 76 at a convenient location for the operator to install the weight 76. The fixture also displays, or automatically provides, the proper weight 76 which the operator is to add and thereby minimise weighting errors by the operator. The fixture has a calibratable acceptance limit, such that if the magnitude of the vibration does not exceed a predetermined amount, the operator is instructed to not add any additional weight. Alternatively, the operation of adding the balance weights may be automated, so that the machine automatically selects a proper weight 76 and secures the weight 76 to the driveline 10.

The fixture 12 further includes rubber isolators 37 between the base 15 of the fixture 12 and the mounting supports 33, 30, 35 for the motor 14, centre bearing 18 , and rear suspension 22, illustrated in figure 1 at one position only. The isolators thus prevent most vibrations produced by the fixture 12 or the environment from being transmitted through the mounts to the driveline 10. Therefore these vibrations are not improperly detected by the sensors 66 as a driveline imbalance.

Furthermore, additional sensors 66" and 66', may be added at the centre bearing 18 and at the drive motor 14, respectively, to determine imbalances at these locations in a manner similar that taught at the rear axle 20 above. Additional weights (not shown) may be added to the driveline 10 at these locations as described above to balance the driveline 10 along the entire length of the drive shafts 11, 13.

One imbalance which may be corrected is not the result of imbalanced components, but is in fact produced by a misalignment of the drive shaft 13 to the differential 26. Such misalignment causes a shift in the centre of gravity of the driveline 10, which is corrected by adding a weight 76 out of phase with this misalignment of the centre of gravity, thereby providing a balanced driveline 10 assembly.

In an alternative embodiment of the present invention the driveline 10 imbalance is measured after the driveline 10 in installed into the motor vehicle (not shown). In this embodiment, the vehicle is driven, preferably on rolls which maintain the vehicle in a stationary position, while a sensor 66 is mounted to the differential case 26 as described above. A second sensor (not shown) detects the rotational orientation of the driveline 10 to determine the angular position of the imbalance as described above. When the imbalance is detected, the operator is instructed to add weight 76 to one or more bolts 72 on the flexible coupling 74 between the drive shaft 13 and the differential 26, as described above.

Additional sensors (not shown) may be provided on the fixture 12 to measure other driveline 10 noise, such as gearing noise and imbalances other than those described above. Such sensors are mounted on the supports 30, 33, 35 in the fixture 12 which simulate the vehicle body mounting positions for attachments to the vehicle. The information obtained from these sensors may be used to determine whether the noise, vibration and harshness (NVH) characteristics of that particular driveline are acceptable. Preferably these sensors are accelerometers, commercially available from Schenck Turner. An unacceptable driveline 10 is rejected prior to installation in the vehicle and further diagnosis may be required to establish where the source of the noise originates.

In the preferred embodiment, a synchroniser device 80 is provided to synchronise the rotational speed of the half shafts of the rear axle. The synchroniser 80 is provided on the fixture 12 and is driven by the rear axle 20. The synchroniser 80 preferably includes a pair of shafts 81, 82 rotatably supported by the fixture 12. Each shaft 81, 82 is drivably connected to the brake rotor 83, 84 on one of the half shafts 28, 29 of the axle 20, respectively. Each shaft 81, 82 is moveable axially to engage and release the half shafts 28, 29. The first shaft 81 drives a belt 85 which is drivably attached to one end of a spindle 87. The second shaft 82 drives a second belt 86 which is drivably attached to the second end of the spindle 87. Thus, the axle 20 drives both shafts 81, 82, which in turn drive the belts 85, 86 to rotate the synchroniser spindle 87. The synchroniser 80 thereby overcomes the differential effect of the rear axle 20 and causes the half shafts 28, 29 to rotate at the same speed, simulating driving on a straight road.

## Claims

1. An apparatus for balancing a driveline assembly of a motor vehicle, the driveline including a drive shaft (16) drivingly engaged through a coupling (74) with an axle assembly comprising a differential (26) enclosed in a case, the apparatus comprising: a drive shaft support (30) for rotatably supporting the drive shaft (16); a motor (14) for rotating the combined assembly of the drive shaft (16) and axle assembly; a vibration sensor (64, 66, 67) for measuring vibrations generated by the drive shaft and axle assembly while rotated and for generating signals in response thereto, the vibration sensor sensing vibrations of one of the group consisting of the drive shaft (16), the differential (26) case and the coupling (54); an imbalance calculator (78), said calculator receiving the signals from said sensor and determining a size and position for a balance weight to be secured to the drive shaft to rotatably balance the driveline; an indicator (79) for displaying the balance weight to be secured to the drive shaft; characterised by a plurality of axle mounting supports (32, 35) for supporting the axle assembly, each of said axle mounting supports supporting the axle assembly at an attachment on the axle assembly where the axle assembly is mounted to the motor vehicle.

2. An apparatus as claimed in claim 1, wherein the vibration sensor comprises a non-contact sensor provided adjacent the differential case to measure vibrations of the differential case.

3. An apparatus as claimed in claim 1 or 2, wherein the coupling (74) comprises a plurality of bolts circumferentially spaced to connect the coupling to the drive shaft and the apparatus further comprises a means for determining the rotational position of one of said bolts relative to the detected imbalance.

4. An apparatus as claimed in any preceding claim, wherein the axle assembly comprises a pair of half shafts (28, 29), each of said half shafts being driven at an independent rotational speed and the apparatus further comprises a synchroniser for synchronising the speed of the half shafts.

5. An apparatus as claimed in any preceding claim, wherein a vibration sensor (66) is mounted on the differential (26) case to directly measure vibrations of the differential case.

6. An apparatus as claimed in any preceding claim, wherein a vibration sensor is mounted on a subframe to measure vibrations of the driveline through the subframe.

## Patentansprüche

1. Vorrichtung zum Auswuchten einer Triebstrangeinheit eines Kraftfahrzeuges, welcher Triebstrang eine Antriebswelle (16) aufweist, welche über eine Kupplung (74) in treibender Verbindung mit einer Achseinheit steht, bestehend aus einem in einem Gehäuse eingeschlossenen Differentialgetriebe (26), und welche Vorrichtung folgendes aufweist: eine die Antriebswelle (16) drehbar lagernde Halterung (30) für die Antriebswelle; einen Motor (14) zum Drehen der kombinierten Einheit aus Antriebswelle (16) und Achseneinheit; einen Vibrationssensor (64, 66, 67) zur Messung von durch die Einheit aus Antriebswelle und Achse während deren Drehung erzeugten Vibrationen und zur Erzeugung von Signalen in Reaktion darauf, wobei der Vibrationssensor Vibrationen eines der Teile der Gruppe erfaßt, die aus der Antriebswelle (16), dem Differentialgehäuse (26) und der Kupplung (54) besteht; einen Unwucht-Rechner (78), wobei besagter Unwucht-Rechner die Signale von besagtem Sensor erhält und eine Größe und eine Lage für ein Auswuchtgewicht bestimmt, das zum Dreh-Auswuchten des Triebstranges an der Antriebswelle zu befestigen ist; eine Anzeigevorrichtung (79) zur Anzeige des an der Antriebswelle zu befestigenden Auswuchgewichtes;
gekennzeichnet durch mehrere Achsbefestigungsaufnahmen (32, 35) zur Aufnahme der Achseinheit, wobei jede Achsbefestigungsaufnahme die Achseinheit an einem solchen Befestigungspunkt an der Achseinheit trägt, wo die Achseinheit auch später im Kraftfahrzeug aufgehängt ist.

2. Vorrichtung nach Anspruch 1, worin der Vibrationssensor von einem unmittelbar am Differentialgehäuse angebrachten kontaktlosen Sensor zur Messung der Vibrationen des Differentialgehäuses gebildet wird.

3. Vorrichtung nach Anspruch 1 oder 2, worin die Kupplung (74) mehrere in Umfangsrichtung von einander beabstandete Bolzen zur Verbindung der Kupplung mit der Antriebswelle beinhaltet, und worin die Vorrichtung außerdem Mittel zur Bestimmung der Drehlage eines der besagten Bolzen in bezug auf die erfaßte Unwucht aufweist.

4. Vorrichtung nach einem beliebigen der vorangehenden Ansprüche, worin die Achseinheit ein Halbwellenpaar (28, 29) aufweist, wobei jede der besagten Halbwellen mit einer unabhängigen Drehgeschwindigkeit angetrieben wird, und worin die Vorrichtung des weiteren eine Synchronisationsvorrichtung zur Synchronisierung der Drehzahlen der Halbwellen aufweist.

5. Vorrichtung nach einem beliebigen der vorangehenden Ansprüche, worin ein Vibrationssensor (66) so am Differentialgehäuse angebracht ist, daß er Vibrationen des Differentialgehäuses direkt mißt.

6. Vorrichtung nach einem beliebigen der vorangehenden Ansprüche, worin ein Vibrationssensor zur Messung der Triebstrangvibrationen durch den Hilfsrahmen an einem Hilfsrahmen angebracht ist.

## Revendications

1. Appareil destiné à équilibrer un ensemble de transmission d'un véhicule à moteur, la transmission comprenant un arbre de transmission (16) en prise motrice par l'intermédiaire d'un accouplement (74), muni d'un ensemble d'essieux comprenant un différentiel (26) enfermé dans un boîtier, l'appareil comprenant : un support d'arbre de transmission (30) destiné à supporter avec possibilité de rotation l'arbre de transmission (16), un moteur (14) destiné à entraîner en rotation l'ensemble combiné de l'arbre de transmission (16) et de l'ensemble d'essieux, un capteur de vibrations (64, 66, 67) destiné à mesurer des vibrations générées par l'arbre de transmission et l'ensemble d'essieux lorsqu'ils sont entraînés en rotation et destiné à générer des signaux en réponse à celles-ci, le capteur de vibrations détectant les vibrations de l'un des éléments du groupe constitué de l'arbre de transmission (16), du boîtier de différentiel (26) et de l'accouplement (54), un calculateur de balourd (78), ledit calculateur recevant les signaux provenant dudit capteur et déterminant les dimensions et la position d'une masse d'équilibrage devant être fixée sur l'arbre de transmission afin d'équilibrer en rotation la transmission, un indicateur (79) destiné à indiquer la valeur de masse d'équilibrage devant être fixée sur l'axe de transmission, caractérisé par une pluralité de supports de montage d'essieux (32, 35) destinés à supporter l'ensemble d'essieux, chacun desdits supports de montage d'essieux supportant l'ensemble d'essieux au niveau d'un point de fixation sur l'ensemble d'essieux, où l'ensemble d'essieux est monté sur le véhicule à moteur.

2. Appareil selon la revendication 1, dans lequel le capteur de vibrations comprend un capteur sans contact disposé de façon adjacente au boîtier de différentiel afin de mesurer les vibrations du boîtier de différentiel.

3. Appareil selon la revendication 1 ou 2, dans lequel l'accouplement (74) comprend une pluralité de boulons espacés suivant la circonférence afin de relier l'accouplement à l'arbre de transmission et l'appareil comprend en outre un moyen destiné à déterminer la position en rotation de l'un desdits boulons par rapport au balourd détecté.

4. Appareil selon l'une quelconque des revendications précédentes, dans lequel l'ensemble d'essieux comprend une paire de demi-arbres (28, 29), chacun desdits demi-arbres étant entraîné à une vitesse de rotation indépendante et l'appareil comprend en outre un synchroniseur destiné à synchroniser la vitesse des demi-arbres.

5. Appareil selon l'une quelconque des revendications précédentes, dans lequel un capteur de vibrations (66) est monté sur le boîtier de différentiel (26) afin de mesurer directement les vibrations du boîtier de différentiel.

6. Appareil selon l'une quelconque des revendications précédentes, dans lequel un capteur de vibrations est monté sur un châssis auxiliaire afin de mesurer les vibrations de la transmission par l'intermédiaire du châssis auxiliaire.
